(19)

Europäisches
Patentamt
European
Patent Office
Office européen
des brevets

(11) **EP 1 992 910 A2**

(12) **EUROPEAN PATENT APPLICATION**

(43) Date of publication:
**19.11.2008 Bulletin 2008/47**

(51) Int Cl.:
***G01B 21/20*** *(2006.01)*

(21) Application number: **08009027.7**

(22) Date of filing: **15.05.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Kadowaki, Soichi**<br>  **Kawasaki-shi**<br>  **Kanagawa 213-8533 (JP)**<br>• **Kojima, Tsukasa**<br>  **Kita-ku, Hokkai-do060-0807 (JP)** |
| (30) Priority: **15.05.2007 JP 2007129260** | (74) Representative: **Grünecker, Kinkeldey,**<br>**Stockmair & Schwanhäusser**<br>**Anwaltssozietät**<br>**Leopoldstraße 4**<br>**80802 München (DE)** |
| (71) Applicant: **Mitutoyo Corporation**<br>**Kawasaki-shi,**<br>**Kanagawa 213-8533 (JP)** | |

(54) **Roundness measuring device, method and program for measuring roundness**

(57)     A roundness measuring device obtains an eccentric position of a measured object with respect to a rotation axis in measuring roundness of the measured object by rotating and driving the measured object. The roundness measuring device includes: a measurement acquisition unit obtaining, as measurements, rotation angles of the measured object and distances from the rotation axis to a surface of the measured object, the distance corresponding to the rotating angle; and an eccentricity calculation unit setting a circular correction circle with its center position provided as variable parameters, calculating the center position of the correction circle that minimizes sum of squares of distances between each of the measurements and the correction circle, in a direction from each of the measurements toward the center position of the correction circle, and determining the center position of the correction circle as the eccentric position.

FIG. 1

**Description**

CROSS-REFERENCE TO RELATED APPLICATIONS

This application is based upon and claims the benefit of priority from the prior Japanese Patent Application No. 2007-129260, filed on May 15, 2007, the entire contents of which are incorporated herein by reference.

BACKGROUND OF THE INVENTION

Field of the Invention

The present invention relates to a roundness measuring device, method and program for measuring the roundness of a measured object.

Description of the Related Art

Roundness measuring devices are used to measure the roundness of columnar or cylindrical workpieces. Such roundness is measured by mounting the workpiece on a turntable (table), rotating the turntable or revolving a detector unit itself around the workpiece, and then tracing the round surface of the workpiece(such as the outer or inner surface) with the detector unit. To evaluate the roundness, the deviation (eccentric position) of the measured object from the rotation axis must be taken into account.

As such, certain configurations of roundness measuring devices for calculating such eccentric positions are disclosed in Patent Documents 1 to 3 (Patent Document 1: Japanese Patent Laid-Open No. (SHO) 56-98602, Patent Document 2: Japanese Patent Laid-Open No. (SHO) 57-207813, and Patent Document 3: Japanese Patent National Publication of Translated Version No. (HEI) 10-507268). Besides, each calculation described therein is based on the radial deviation from a reference circle with a predetermined radius centered at the rotation axis.

However, each calculation described in Patent Documents 1 to 3 is an approximate calculation, which is premised on the assumption that a distance between an eccentric position and the rotation axis is small enough in comparison with the radius of the workpiece. Thus, with the calculation methods described in Patent Documents 1 to 3, calculation errors would occur when any event against the assumption of approximate calculation is found. For example, when a measurement is performed on a workpiece having a small radius, with its eccentric position quite apart from the rotation axis, some errors would be included in the calculation result.

Therefore, an object of the present invention is to provide a roundness measuring device that can obtain an eccentric position with a high degree of accuracy even if its eccentric position is quite apart from the rotation axis, and to provide a method of and program for measuring roundness.

SUMMARY OF THE INVENTION

One aspect of the present invention provides a roundness measuring device for obtaining an eccentric position of a measured object with respect to a rotation axis in measuring roundness of the measured object with a detector unit, by rotating and driving the measured object or the detector unit about the rotation axis with a rotary drive unit, the roundness measuring device comprising: a measurement acquisition unit obtaining, as measurements, rotation angles of the measured object provided by the rotary drive unit and distances from the rotation axis to a surface of the measured object, the distance corresponding to the rotation angle; and an eccentricity calculation unit setting a circular correction circle with its center position provided as variable parameters, calculating the center position of the correction circle that minimizes sum of squares of distances between each of the measurements and the correction circle, in a direction from each of the measurements toward the center position of the correction circle, and determining the calculated center position of the correction circle as the eccentric position.

With the above-mentioned configuration, a correction circle is set with its center position and radius value provided as parameters, those parameters are obtained and a correction circle is determined so that a minimum deviation from the measurement point would be provided, the center position of the correction circle is considered as the eccentric position. Thus, the eccentric position may be obtained with a high degree of accuracy, not limited to the distances of the eccentric position from the rotation axis.

The eccentricity calculation unit may be configured to apply the Gauss-Newton method to calculate minimum sum of squares of distances between each of the measurements and the correction circle in a direction toward the center position of the correction circle. The roundness measuring device may further comprise an analysis unit analyzing roundness or cylindricity based on each of the rotating angles and distances between each of the measurements and the correction circle in a direction from the measurements toward the center position of the correction circle, the distance corresponding to the rotating angle, after the center position of the correction circle is calculated by the eccentricity calculation unit.

Another aspect of the present invention provides a method of measuring roundness using a roundness measuring device for obtaining an eccentric position of a measured object with respect to a rotation axis in measuring roundness of the measured object with a detector unit, by rotating and driving the measured object or the detector unit about the rotation axis with a rotary drive unit, the method comprising: a measurement acquisition step of obtaining, as measurements, rotation angles of the measured object provided by the rotary drive unit and distances from the rotation axis to a surface of the measured object, the distance corresponding to the rotating angle; and an eccentricity calculation step of setting a circular correction circle with its center position provided as variable parameters, calculating the center position of the correction circle that minimizes sum of squares of distances between each of the measurements and the correction circle, in a direction from each of the measurements toward the center position of the correction circle, and determining the calculated center position of the correction circle as the eccentric position.

Still another aspect of the present invention provides a program for measuring roundness adapted to cause an eccentric position of a measured object with respect to a rotation axis to be obtained in measuring roundness of the measured object with a detector unit by rotating and driving the measured object or the detector unit about the rotation axis with a rotary drive unit, the program causing a computer to perform: a measurement acquisition step of obtaining, as measurements, rotation angles of the measured object provided by the rotary drive unit and distances from the rotation axis to a surface of the measured object, the distance corresponding to the rotating angle; and an eccentricity calculation step of setting a circular correction circle with its center position provided as variable parameters, calculating the center position of the correction circle that minimizes sum of squares of distances between each of the measurements and the correction circle, in a direction from each of the measurements toward the center position of the correction circle, and determining the calculated center position of the correction circle as the eccentric position.

BRIEF DESCRIPTION OF THE DRAWINGS

FIG. 1 is a schematic diagram illustrating a configuration of a roundness measuring unit according to an embodiment of the present invention;

FIG. 2 is a block diagram illustrating a configuration of the processor main unit 31 according to an embodiment of the present invention;

FIG. 3 is a flowchart illustrating operations of a roundness measuring unit according to an embodiment of the present invention; and

FIG. 4 is a diagram illustrating a relationship between measurements and the eccentric position that are measured by the roundness measuring unit according to an embodiment of the present invention.

DETAILED DESCRIPTION OF THE EMBODIMENTS

Preferred embodiments of the present invention will now be described below with reference to the accompanying drawings.

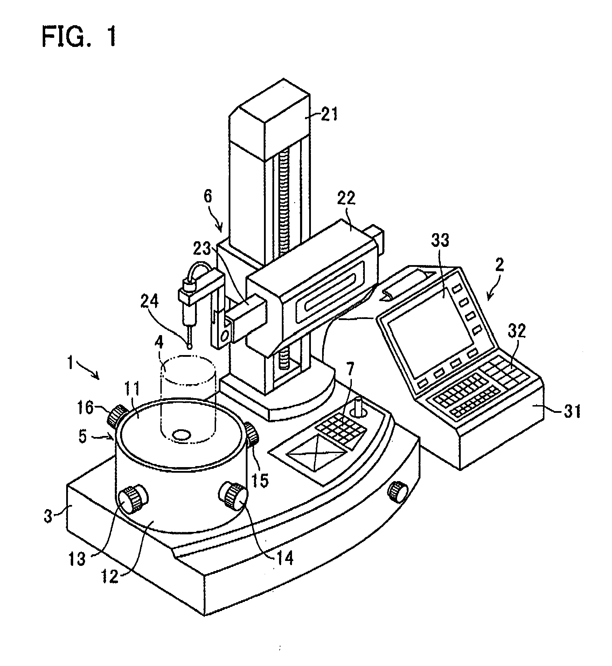

Referring now to FIG. 1, external appearance structure of a roundness measuring device according to an embodiment of the present invention will be described below. FIG. 1 is a perspective vies of external appearance of the roundness measuring device according to an embodiment of the present invention. The roundness measuring device comprises a measuring unit 1 and a processor 2. The measuring unit 1 includes a base 3, a centering table 5 provided on the base 3, on which table a columnar or cylindrical workpiece 4 is mounted and rotated thereon, a displacement sensor 6 for detecting a radial displacement of the round surface of the workpiece 4 mounted on the centering table 5, and an operation section 7 for operating these.

The centering table 5 is provided to rotate the workpiece 4 mounted on the turntable 11, by rotating and driving a discoid turntable 11 with a rotary driver 12 positioned under the discoid turntable 11. The rotary driver 12 has a side surface, in which centering knobs 13 and 14 for adjusting axis misalignment, as well as leveling knobs 15 and 16 for adjusting inclination, are positioned at angular intervals of substantially 90° in circumferential direction. Through the operation of these knobs 13 to 16, centering and leveling of the turntable 11 may be achieved.

The displacement sensor 6 is configured as follows: The base 3 has a column 21 provided to stand upright thereon and extend upward therefrom. The column 21 has a slider 22 installed thereon so as to move in vertical direction. The slider 22 has an arm 23 installed thereon. The arm 23 is driven in horizontal direction so that a stylus 24 provided on its end comes in contact with the round surface of the workpiece 4, and subsequently the workpiece 4 is rotated, which enables radial displacements of the round surface of the workpiece 4 to be obtained as measurement data.

The measurement data obtained by the displacement sensor 6 is input to the processor 2, which in turn obtains, for example, the center coordinates and roundness of the measured section of the workpiece 4. The processor 2 has a processor main unit 31 that performs computations, an operation section 32, and a display 33.

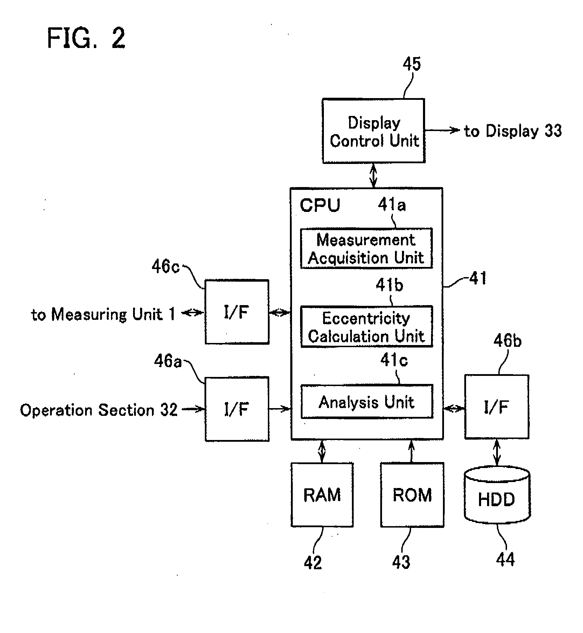

Referring now to FIG. 2, the description is made to a configuration of the processor main unit 31. FIG. 2 is a block diagram illustrating a configuration of the processor main unit 31 according to an embodiment of the present invention.

The processor main unit 31 mainly has a CPU 41, a RAM 42, a ROM 43, a HDD 44, and a display control unit 45. In the processor main unit 31, code information and position information input from the operation section 32 are input to the CPU 41 via an I/F 46a. The CPU 41 performs operations, such as a measurement execution, eccentricity calculation, analysis, or display operation, according to a macro program stored in the ROM 43 and other programs stored in the RAM 42 from the HDD 44 via an I/F 46b.

According to the measurement execution operation, the CPU 41 controls the roundness measuring unit 1 via an I/F 46c. The HDD 44 is a storage medium that stores various types of control programs. The RAM 42 provides work areas for various types of operations, in addition to storage of various types of programs. In addition, the CPU 41 displays measurement results on the display 33 via the display control unit 45.

The CPU 41 reads and executes various types of programs from the HDD 44, thereby functioning as a measurement acquisition unit 41a, an eccentricity calculation unit 41b, and an analysis unit 41c.

The measurement acquisition unit 41a obtains the following as measurements P: rotating angles of the workpiece 4 provided by the rotary driver 12; and distances from the rotation axis to the surface of the workpiece 4. Note that the distances correspond to the rotation angles.

The eccentricity calculation unit 41b sets a circular correction circle CL with its center position (a, b) provided as variable parameters. Then, the eccentricity calculation unit 41b calculates a center position (a, b) of the correction circle CL that minimizes sum of squares of distances (deviation) between each of the measurements P and the correction circle CL, in the direction from each of the measurements P toward the center position (a, b) of the correction circle CL. This means that the calculated center position (a, b) of the correction circle CL has the same value as that of the eccentric position of the workpiece 4. Accordingly, the eccentricity calculation unit 41b determines that the center position (a, b) coincides with the eccentric position of the workpiece 4. Besides, the radius of the correction circle CL is preset to, e.g., R+r.

Based on the center position (a, b) of the correction circle CL calculated at the eccentricity calculation unit 41b, the analysis unit 41c analyzes the concentricity (concentric axis) and the roundness (cylindricity).

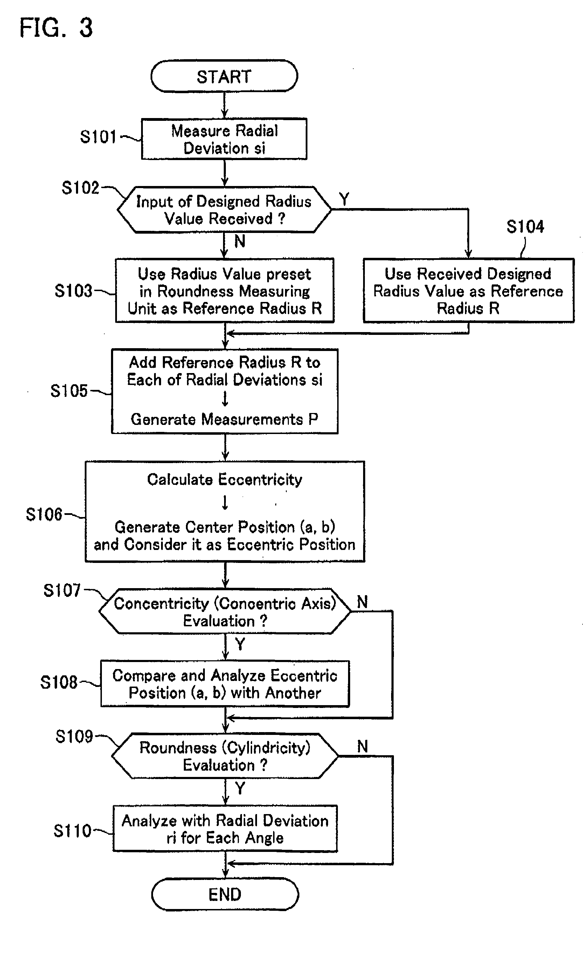

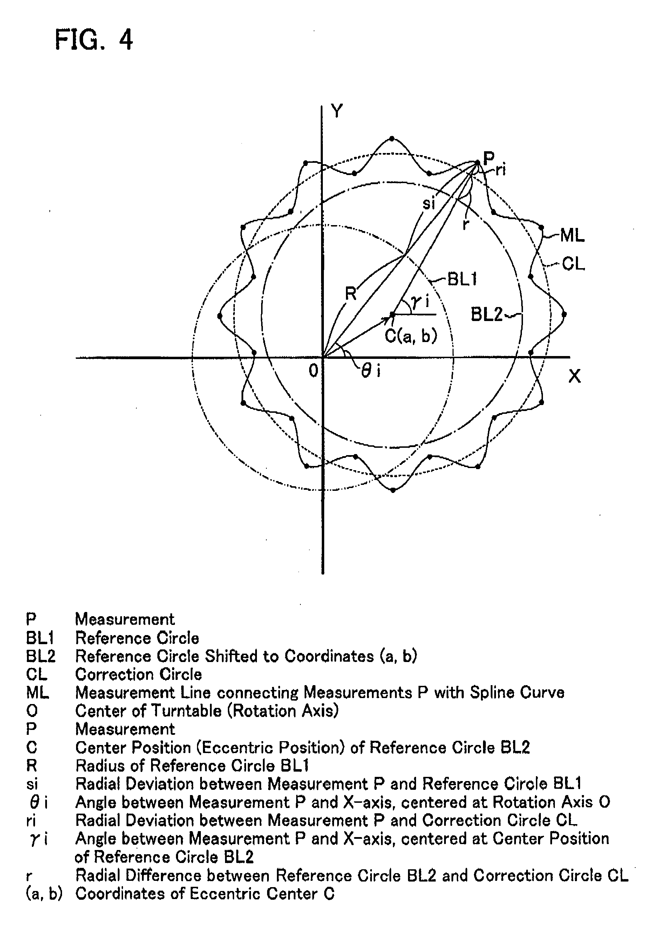

Referring now to FIGS. 3 and 4, the description is made to operations of the measurement acquisition unit 41a, the eccentricity calculation unit 41b, and the analysis unit 41c as described above. FIG. 3 is a flowchart illustrating operations of the roundness measuring device according to an embodiment of the present invention. FIG. 4 illustrates a relationship between measurements and an eccentric position.

As illustrated in FIG. 3, the measurement acquisition unit 41a first measures a radial deviation si of the workpiece 4 (step S101), and then receives an input of the designed radius value of the workpiece 4 (step S102). At this moment, if it is determined by the measurement acquisition unit 41a that an input of the designed radius value has not been received ("N" branch at step S102), then a radius value that is preset in the roundness measuring unit is used as a reference radius R (step S103). Alternatively, if it is determined by the measurement acquisition unit 41a that an input of the designed radius value has been received ("Y" branch at step s102), then the received designed radius value is used as a reference radius R (step 5104).

Referring now to FIG. 4, the description is made to a radial deviation si of the workpiece 4 and a measurement P of the workpiece 4. In FIG. 4, a circle (indicated by double-dashed chain lines in FIG. 4) with its reference radius R and at the origin O corresponding to the rotation axis, is called "a reference circle BL1". In FIG. 4, an x-axis and y-axis are defined, The X and Y axis cross orthogonally at the origin O. An annular figure with a corrugated curve (indicated by a full line in FIG. 4), which is located at the upper right side of the reference circle BL1, is a measurement line ML that connects measurements P representing the surface of the workpiece 4 with a spline curve. The radial deviations si of the workpiece 4 obtained at step S101 is a deviation (length) of a measurement P from the reference circle BL1 (radius R). This means that the radial deviation si represents the minimum distance from the measurement P to the reference circle BL1. Accordingly, if the measured radial deviation si is 0, the measurement P is located on the reference circle BL1. In addition, if the measured radial deviation si is a positive value, the measurement P is located outside the reference circle BL1, and if the measured radial deviation is a negative value, the measurement P is located inside the reference circle BL1. Of course, a radial deviation si plus the reference radius R of the reference circle BL1 makes a measurement P.

Returning to FIG. 3, the description is made to an operation following step S103 or S104. After the operation of step S103 or S104, the measurement acquisition unit 41a adds the reference radius R to each of the radial deviations si to generate measurements P (step S105). Then, the eccentricity calculation unit 41b performs an eccentricity calculation to generate the center position (a, b) of the workpiece 4, which position is considered as the eccentric position (step S106).

Referring now to FIG. 4, the description is made to the eccentricity calculation performed at step S106. In this operation, it is assumed that a correction circle CL is obtained by correcting the shape of the measurement line ML. The correction circle has a radius of R+r and is centered at the center position (a, b). It is also assumed that $\gamma$ represents an

angle that is formed between the x-axis and a line segment that extends from the center position (a, b) to each of the measurements P. Then, a reference circle BL2 having a shifted center position (a, b) is assumed. The reference circle BL2 has a reference radius R. The correction circle CL has a radial difference of "r" when considering a deviation from the reference radius R. It is further assumed that "ri" represents a radial deviation from the correction circle CL for each of the measurements P. The eccentricity calculation of step S106 is performed to obtain the center position (a, b) of the correction circle CL as a variable parameter. Besides, it is assumed that the radius R+r of the correction circle CL has a preset predetermined value. In other words, a radial deviation ri represents a distance between each of the measurements P and the correction circle CL in the direction toward the center position (a, b) of the correction circle CL.

In the eccentricity calculation, a radial deviation ri and an angle $\gamma$ with respect to any measurement P are calculated by the following Formula 1 and Formula 2, respectively.

[Formula 1]

$$ri = \sqrt{(R+si)^2 + a^2 + b^2 - 2(R+si)(a\cos\theta_i + b\sin\theta_i)} - R - r$$

[Formula 2]

$$\gamma = \arctan\left(\frac{(R+si)\sin\theta_i - b}{(R+si)\cos\theta_i - a}\right)$$

In this case, if a radial deviation ri is partially differentiated with each of the parameters ("a" and "b") in Formula 1, then the following Formula 3 through Formula 5 are obtained:

[Formula 3]

$$\frac{\partial ri}{\partial a} = \frac{a - (R+si)\cos\theta_i}{\sqrt{(R+si)^2 + a^2 + b^2 - 2(R+si)(a\cos\theta_i + b\sin\theta_i)}}$$

[Formula 4]

$$\frac{\partial ri}{\partial b} = \frac{b - (R+si)\sin\theta_i}{\sqrt{(R+si)^2 + a^2 + b^2 - 2(R+si)(a\cos\theta_i + b\sin\theta_i)}}$$

[Formula 5]

$$\frac{\partial ri}{\partial r} = -1$$

The eccentricity calculation unit 41b obtains parameters "a" and "b" through a non-linear least square method where a deviation ri based on Formula 1 is employed as an evaluation function. In the non-linear least square method, φ (sum of squares of ri) indicated in the following Formula 6 is taken as the minimum value.

[Formula 6]

$$\phi = \sum_i ri^2$$

Wherein, the Gauss-Newton method is applied to the non-linear least square method, the following Formula 7 through Formula 10 are held:

[Formula 7]

$$\tilde{A}A\Delta X = b$$

[Formula 8]

$$\tilde{A}A = \begin{bmatrix} \sum_i \left( \frac{\partial ri}{\partial a}\Big|_{x=x^{(k)}} \right)^2 & \sum_i \frac{\partial ri}{\partial a}\Big|_{x=x^{(k)}} \frac{\partial ri}{\partial b}\Big|_{x=x^{(k)}} & \sum_i \frac{\partial ri}{\partial a}\Big|_{x=x^{(k)}} \frac{\partial ri}{\partial r}\Big|_{x=x^{(k)}} \\ \sum_i \frac{\partial ri}{\partial a}\Big|_{x=x^{(k)}} \frac{\partial ri}{\partial b}\Big|_{x=x^{(k)}} & \sum_i \left( \frac{\partial ri}{\partial b}\Big|_{x=x^{(k)}} \right)^2 & \sum_i \frac{\partial ri}{\partial b}\Big|_{x=x^{(k)}} \frac{\partial ri}{\partial r}\Big|_{x=x^{(k)}} \\ \sum_i \frac{\partial ri}{\partial a}\Big|_{x=x^{(k)}} \frac{\partial ri}{\partial r}\Big|_{x=x^{(k)}} & \sum_i \frac{\partial ri}{\partial b}\Big|_{x=x^{(k)}} \frac{\partial ri}{\partial r}\Big|_{x=x^{(k)}} & \sum_i \left( \frac{\partial ri}{\partial r}\Big|_{x=x^{(k)}} \right)^2 \end{bmatrix}$$

[Formula 9]

$$\Delta X = \begin{bmatrix} \Delta a \\ \Delta b \\ \Delta c \end{bmatrix}$$

[Formula 10]

$$b = \begin{bmatrix} \sum_i ri \bullet \frac{\partial ri}{\partial a}\Big|_{x=x^{(k)}} \\ \sum_i ri \bullet \frac{\partial ri}{\partial b}\Big|_{x=x^{(k)}} \\ \sum_i ri \bullet \frac{\partial ri}{\partial r}\Big|_{x=x^{(k)}} \end{bmatrix}$$

Then, the eccentricity calculation unit 41b performs computations for modifying approximate solutions X in sequence, as indicated by the relationship in the following Formula 11, to calculate parameters "a" and "b".

[Formula 11]

$$X^{(k+1)} = X^{(k)} - \Delta X$$

Returning now to FIG. 3, the description is continued below. Following step S104 or S105, the analysis unit 41c determines whether an input has been received that indicates concentricity (concentric axis) evaluation to be performed (step S107). In this case, if it is determined by the analysis unit 41c that an input has been received that indicates concentricity (concentric axis) evaluation to be performed ("Y" branch at step S107), then the eccentric position of the workpiece 4 (the center position (a, b) in FIG. 4) is compared with that of another workpiece to analyze the concentricity (concentric axis) (step S108). Alternatively, if it is determined by the analysis unit 41c that an input has not been received that indicates concentricity (concentric axis) evaluation to be performed ("N" branch at step S107), then the process proceeds to the next step.

Then, the analysis unit 41c determines whether an input has been received that indicates roundness (cylindricity) evaluation to be performed (step S109). In this case, if it is determined by the analysis unit 41c that an input has been received that indicates roundness (cylindricity) evaluation to be performed ("Y" branch at step S109), then the roundness (cylindricity) is analyzed with a radial deviation ri for each angle (step S110), and the process terminates. Besides, at the operation of step S110, each of the measurements P may be correction in such a way that the eccentric position (a, b) is aligned with the axis 0 (the eccentric position (a, b) is subtracted from each of the measurements P), and the roundness (cylindricity) may be analyzed based on the correction measurements P. Alternatively, at the operation of step S108, if it is determined by the analysis unit 41c that an input has not been received that indicates roundness (cylindricity) evaluation to be performed ("N" branch at step S109), then the above-mentioned step S110 is skipped and the process terminates.

As described above, with the roundness measuring device according to an embodiment of the present invention, a correction circle CL is set with its center position (a, b) provided as variable parameters. Then, the parameters and the correction circle CL are determined that minimizes the sum of squares of radial deviations from the correction circle CL ri for each measurements P would be minimum, and the center position is considered as the eccentric position. Thus, the eccentric position may be obtained with a high degree of accuracy, not limited to the distances of the eccentric position from the rotation axis O.

By way of example, the present invention has the following advantages when a measurement is performed with a cylindrical workpiece provided in a highly eccentric condition with respect to the rotation center and when a measurement is performed with some eccentricity in shape of the workpiece itself for different parts (such as a camshaft or crankshaft). The first advantage is that evaluation may be performed using an eccentric (center) position with higher accuracy, when a sectional center position, such as concentricity or coaxiality, is to be evaluated. The second advantage is that evaluation may be performed using a radial deviation, on which off-centering compensation is performed based on such eccentricity with higher accuracy, when a radial deviation such as roundness or cylindricity is to be evaluated after off-centering compensation.

Comparing the present invention with the prior art, a significant increase in errors was found in the prior art if there exists an eccentricity equal to or more than 20% of the radius of the workpiece. However, according to the present invention, lesser errors may be provided than in the prior art even if there exists an eccentricity equal to or more the 20% of the radius of the workpiece.

**Claims**

1. A roundness measuring device for obtaining an eccentric position of a measured object with respect to a rotation axis in measuring roundness of the measured object with a detector unit, by rotating and driving the measured object or the detector unit about the rotation axis with a rotary drive unit, the roundness measuring device comprising:

   a measurement acquisition unit obtaining, as measurements, rotation angles of the measured object provided by the rotary drive unit and distances from the rotation axis to a surface of the measured object, the distance corresponding to the rotation angle; and
   an eccentricity calculation unit setting a circular correction circle with its center position provided as variable parameters, calculating the center position of the correction circle that minimizes sum of squares of distances between each of the measurements and the correction circle, in a direction from each of the measurements toward the center position of the correction circle, and determining the calculated center position of the correction circle as the eccentric position.

**2.** The roundness measuring device according to claim 1, wherein
the eccentricity calculation unit applies the Gauss-Newton method to calculate minimum sum of squares of the distances between each of the measurements and the correction circle in a direction toward the center position of the correction circle.

**3.** The roundness measuring device according to claim 1, further comprising:

an analysis unit analyzing roundness or cylindricity based on each of the rotating angles and distances between each of the measurements and the correction circle in a direction from the measurements toward the center position of the correction circle, the distance corresponding to the rotating angle, after the center position of the correction circle is calculated by the eccentricity calculation unit.

**4.** A method of measuring roundness using a roundness measuring device for obtaining an eccentric position of a measured object with respect to a rotation axis in measuring roundness of the measured object with a detector unit, by rotating and driving the measured object or the detector unit about the rotation axis with a rotary drive unit, the method comprising:

a measurement acquisition step of obtaining, as measurements, rotation angles of the measured object provided by the rotary drive unit and distances from the rotation axis to a surface of the measured object, the distance corresponding to the rotating angle; and
an eccentricity calculation step of setting a circular correction circle with its center position provided as variable parameters, calculating the center position of the correction circle that minimizes sum of squares of distances between each of the measurements and the correction circle, in a direction from each of the measurements toward the center position of the correction circle, and determining the calculated center position of the correction circle as the eccentric position.

**5.** The method of measuring roundness according to claim 4, wherein
in the eccentricity calculation step, applying the Gauss-Newton method to calculate minimum sum of squares of the distances between each of the measurements and the correction circle in a direction toward the center position of the correction circle.

**6.** The method of measuring roundness according to claim 4, further comprising:

an analysis step of analyzing roundness or cylindricity based on each of the rotating angles and distances between each of the measurements and the correction circle in a direction from the measurements toward the center position of the correction circle, the distance corresponding to the rotating angles, after the center position of the correction circle is calculated by the eccentricity calculation unit.

**7.** A program for measuring roundness adapted to cause an eccentric position of a measured object with respect to a rotation axis to be obtained in measuring roundness of the measured object with a detector unit by rotating and driving the measured object or the detector unit about the rotation axis with a rotary drive unit, the program causing a computer to perform:

a measurement acquisition step of obtaining, as measurements, rotation angles of the measured object provided by the rotary drive unit and distances from the rotation axis to a surface of the measured object, the distance corresponding to the rotating angle; and
an eccentricity calculation step of setting a circular correction circle with its center position provided as variable parameters, calculating the center position of the correction circle that minimizes sum of squares of distances between each of the measurements and the correction circle, in a direction from each of the measurements toward the center position of the correction circle, and determining the calculated center position of the correction circle as the eccentric position.

**8.** The program for measuring roundness according to claim 7, wherein
in the eccentricity calculation step, applying the Gauss-Newton method to calculate minimum sum of squares of the distances between each of the measurements and the correction circle in a direction toward the center position of the correction circle.

**9.** The program for measuring roundness according to claim 7, the program further causing a computer to perform,

an analysis step of analyzing roundness or cylindricity based on each of the rotating angles and distances between each of the measurements and the correction circle in a direction from the measurements toward the center position of the correction circle, the distance corresponding to the rotating angle, after the center position of the correction circle is calculated by the eccentricity calculation unit.

FIG. 1

# FIG. 2

Display Control Unit — 45 — → to Display 33

CPU — 41a

Measurement Acquisition Unit

41b — 41

Eccentricity Calculation Unit

41c

Analysis Unit

46c — to Measuring Unit 1 ↔ I/F ↔

46a — Operation Section 32 → I/F →

46b — I/F ↔

RAM — 42

ROM — 43

HDD — 44

# FIG. 3

```
        ┌─────────────────────┐
        │        START        │
        └─────────────────────┘
                  │
        ┌─────────────────────┐
S101────│   Measure Radial    │
        │    Deviation si     │
        └─────────────────────┘
                  │
S102────< Input of Designed Radius >──Y────────────────┐
        < Value Received ?       >                     │
                  │                              S104   │
                  │ N                                   ▼
        ┌─────────────────────┐        ┌─────────────────────┐
        │ Use Radius Value     │        │  Use Received Designed│
S103────│ preset in Roundness  │        │  Radius Value as      │
        │ Measuring Unit as    │        │  Reference Radius R   │
        │ Reference Radius R   │        └─────────────────────┘
        └─────────────────────┘                   │
                  │◄──────────────────────────────┘
        ┌─────────────────────┐
        │ Add Reference Radius │
        │ R to Each of Radial  │
S105────│    Deviations si     │
        │          ↓           │
        │ Generate Measurements│
        │          P           │
        └─────────────────────┘
                  │
        ┌─────────────────────┐
        │ Calculate Eccentricity│
        │          ↓           │
S106────│ Generate Center      │
        │ Position (a, b)      │
        │ and Consider it as   │
        │ Eccentric Position   │
        └─────────────────────┘
                  │
S107────< Concentricity (Concentric Axis) >──N───┐
        <        Evaluation ?            >        │
                  │ Y                             │
        ┌─────────────────────┐                  │
S108────│ Compare and Analyze  │                  │
        │ Eccentric Position   │                  │
        │ (a, b) with Another  │                  │
        └─────────────────────┘                  │
                  │◄────────────────────────────┘
S109────< Roundness (Cylindricity) >──N───┐
        <      Evaluation ?        >       │
                  │ Y                       │
        ┌─────────────────────┐            │
S110────│ Analyze with Radial  │            │
        │ Deviation ri for     │            │
        │     Each Angle       │            │
        └─────────────────────┘            │
                  │◄────────────────────────┘
        ┌─────────────────────┐
        │         END          │
        └─────────────────────┘
```

# FIG. 4

| P | Measurement |
|---|---|
| BL1 | Reference Circle |
| BL2 | Reference Circle Shifted to Coordinates (a, b) |
| CL | Correction Circle |
| ML | Measurement Line connecting Measurements P with Spline Curve |
| O | Center of Turntable (Rotation Axis) |
| P | Measurement |
| C | Center Position (Eccentric Position) of Reference Circle BL2 |
| R | Radius of Reference Circle BL1 |
| si | Radial Deviation between Measurement P and Reference Circle BL1 |
| $\theta i$ | Angle between Measurement P and X-axis, centered at Rotation Axis O |
| ri | Radial Deviation between Measurement P and Correction Circle CL |
| $\gamma i$ | Angle between Measurement P and X-axis, centered at Center Position of Reference Circle BL2 |
| r | Radial Difference between Reference Circle BL2 and Correction Circle CL |
| (a, b) | Coordinates of Eccentric Center C |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007129260 A
- JP SHO5698602 B
- JP SHO57207813 B
- JP HEI10507268 B